## Europäisches Patentamt

## European Patent Office

## Office européen des brevets

(11) Veröffentlichungsnummer: **0 151 670**
**A2**

# (12) EUROPÄISCHE PATENTANMELDUNG

(21) Anmeldenummer: **84105652.6**

(22) Anmeldetag: **18.05.84**

(51) Int. Cl.⁴: **F 16 L 55/16**
**F 16 L 57/00**

(30) Priorität: **13.02.84 CH 669/84**

(43) Veröffentlichungstag der Anmeldung:
**21.08.85 Patentblatt 85/34**

(84) Benannte Vertragsstaaten:
**AT BE CH DE FR GB IT LI LU NL SE**

(71) Anmelder: **GEBRÜDER SULZER AKTIENGESELLSCHAFT**
**Zürcherstrasse 9**
**CH-8401 Winterthur(CH)**

(72) Erfinder: **Fricker, Hans**
**Breitestrasse 22 Sulz**
**CH-8544 Rickenbach-Attikon(CH)**

(74) Vertreter: **Dipl.-Ing. H. Marsch Dipl.-Ing. K. Sparing**
**Dipl.-Phys.Dr. W.H. Röhl Patentanwälte**
**Rethelstrasse 123**
**D-4000 Düsseldorf(DE)**

(54) Vorrichtung zur Bruchverhinderung an einer Rohrleitung.

(57) Die Vorrichtung (1) weist mehrere Zugstäbe (4) auf, die aussen an der Rohrleitung (2) beiderseits einer gefährdeten Stelle (3) befestigt sind. Die Zugstäbe sind mittels zweier die Rohrleitung (2) umschlingender Zugstäbe (10) gegen die Rohrleitung gedrückt.

Hierdurch wird es möglich, einen Bruch an der zum Beispiel durch Korrosion gefährdeten Stelle der Rohrleitung zu verhindern oder zu erschweren oder – falls schon ein kleines Leck entstanden ist – sicherzustellen, dass das Leck nicht grösser wird.

Fig. 1

P.5866 Stph

Gebrüder Sulzer Aktiengesellschaft, Winterthur, Schweiz

Vorrichtung zur Bruchverhinderung an einer Rohrleitung

Die Erfindung betrifft eine Vorrichtung zum Verhindern oder zum Erschweren des Entstehens eines Bruches an einer eine gefährdete Stelle aufweisenden Rohrleitung.

Es hat sich im praktischen Betrieb von wärme- und festigkeitsmässig hoch beanspruchten Anlagen, die gleichzeitig strengen Sicherheitsauflagen unterworfen sind - wie z.B. in der chemischen Industrie und insbesondere in nuklearen Anlagen - gezeigt, dass geringe Materialschäden in Rohrleitungen häufig zu grossen Verlusten führen, weil die Beseitigung der Schäden unerwünschte, oft lange Betriebsunterbrechungen einer ganzen Anlage zur Folge hat. Ein repräsentativer Fall dieser Art ist den Betreibern von Siedewassernuklearreaktoren bekannt, in denen die zusammengesetzte Wirkung von hohen mechanischen Spannungen infolge hoher Drücke, von Wärmespannungen infolge hoher Temperaturen, von chemischer Korrosion und von Bestrahlung zu Rissen in den Schweissnähten der Rohrleitungen des Primärkreislaufes geführt haben. Den Reaktor nach dem Feststellen
solcher Risse, die zu einem Rohrleitungsbruch führen
können, in Betrieb zu halten, ist unzulässig und die
Reparatur der betroffenen Rohrleitung bedingt eine Stilllegung des Kraftwerkes während mehrerer Tage, womit
auch hohe finanzielle Verluste verbunden sind.

Der Erfindung liegt die Aufgabe zugrunde, eine Vorrichtung zu schaffen, mit der es auf einfache, relativ
schnell anwendbare Art möglich ist, einen Bruch an der
z.B. durch Korrosion gefährdeten Stelle der Rohrleitung
zu verhindern oder zu erschweren und - falls schon ein
Leck entstanden ist - sicherzustellen, dass nur eine
ungefährliche Menge des Mediums durch das Leck austreten
kann, d.h. dass das Leck nicht grösser wird.
Diese Aufgabe wird erfindungsgemäss dadurch gelöst,
dass mindestens ein Zugstab aussen an der Rohrleitung
beiderseits der gefährdeten Stelle befestigt ist und
dass mindestens ein die Rohrleitung mit dem Zugstab umschlingendes Zugband vorgesehen ist, das den Zugstab
gegen die Rohrleitung drückt. Die neue Vorrichtung ist
besonders montagefreundlich. Das Befestigen des Zugstabes an einer Rohrleitung ist grundsätzlich allein
durch Reibung möglich, so dass eine schonende Behandlung der Oberfläche der Rohrleitung erreichbar werden
kann. Ein zusätzlicher Vorteil der Erfindung liegt darin,
dass die Vorrichtung in den meisten Fällen für eine
Lebensdauer ausgelegt werden kann, die mindestens so
gross wie die verbleibende Lebensdauer der betreffenden
Anlage ist, womit eine grosse Terminfreiheit in der
Wahl des definitiven Reparaturzeitpunktes möglich ist.
Weitere Vorteile sind die Einfachheit der Vorrichtung
und eine grosse Zahl von Ausführungsvarianten, wodurch
sich die Vorrichtung an die jeweils vorliegenden räumlichen Verhältnisse anpassen lässt.

Durch die Anordnung gemäss Anspruch 2 wird eine gute Verteilung der Rohrbeanspruchung erreicht.

Die grösste Sicherheit gegen Bruch bietet eine Vorrichtung gemäss Anspruch 3. Dadurch dass der Zugstab mit der Rohrleitung in wärmeleitender Verbindung steht, weisen beide im Betrieb etwa die gleiche Temperatur auf und die von den unterschiedlichen Wärmedehnungskoeffizienten resultierende relative Verkürzung des Zugstabes beim Uebergang von der ausserbetrieblichen Temperatur zur Betriebstemperatur verursacht eine die gefährdete Stelle entlastende Kraft. Diese Kraft ist eine Funktion der Wärmedehnungskoeffizienten des Zugstabes und der Rohrleitung des Temperaturunterschiedes in der Wand zwischen "Ausser-Betrieb" und "In-Betrieb" und der Festigkeitseigenschaften des Zugstabes. Sie kann infolgedessen im voraus berechnet oder weitgehend optimiert werden. Häufig erübrigt sich in diesem Fall eine eigentliche Vorspannung des Zugstabes, wobei dann lediglich darauf geachtet werden muss, dass vor der Inbetriebnahme der Anlage kein Spiel zwischen dem Zugstab und der Rohrleitung herrscht.

Bei den Ausführungsformen nach den Ansprüchen 4 bis 6 ist die nötige Anpresskraft zwischen der Rohrleitung und dem Zugstab klein, wobei der Eingriff in die Oberfläche der Rohrleitung gering und festigkeitsmässig günstig gehalten werden kann.

Die Ausführungsformen nach den Ansprüchen 7 und 8 stellen sehr einfache und kompakte Elemente zum Anpressen des Zugstabes an die Rohrleitung dar.

Die Ausführungsform nach Anspruch 9 ermöglicht auf günstige Weise das Aufbringen von erheblichen Anpresskräften.

Durch die Ausführungsform gemäss Anspruch 10 ist eine Beseitigung von Spiel und gegebenenfalls das Herbeiführen einer Vorspannung zwischen dem Zugstab und der Rohrleitung auf einfache Art möglich.

Ein optimales Anliegen der Vorrichtung an der Rohrleitung ist durch die Ausführungsform nach Anspruch 11 gegeben.

Anspruch 12 charakterisiert eine weitere Ausführungsform der Erfindung, um Spielfreiheit und Vorspannung zwischen dem Zugstab und der Rohrleitung zu bewerkstelligen.

Eine Ausführungsform der Erfindung bei einer eine Rohrkrümmung aufweisenden Rohrleitung ist in Anspruch 13 gekennzeichnet.

Einige Ausführungsbeispiele der Erfindung sowie deren Vorteile sind in der folgenden Beschreibung anhand der Zeichnung näher erläutert. Es zeigen:

Fig. 1    schematisch eine perspektivische Ansicht einer Vorrichtung nach der Erfindung,

Fig. 2    einen Längsschnitt durch einen Teil einer Rohrleitung mit einer gegenüber Fig. 1 leicht abgewandelten Vorrichtung,

Fig. 3    einen Ausschnitt der Verzahnung des Zugstabes, in grösserem Massstab als in Fig. 2,

Fig. 4    einen Längsschnitt durch ein anderes Ausführungsbeispiel der Erfindung,

Fig. 5    einen Schnitt nach der Linie V - V in Fig. 4,

Fig. 6    einen Längsschnitt durch einen Teil eines weiteren Ausführungsbeispiels der Erfindung,

Fig. 7    unter Weglassen der Laschenkette eine Draufsicht der Vorrichtung nach Fig. 6,

Fig. 8    einen Längsschnitt durch einen Teil eines weiteren Beispiels der Erfindung,

Fig. 9    eine perspektivische Ansicht eines Bauteils der Vorrichtung nach Fig. 8,

Fig. 10   schematisch, teilweise geschnitten und teilweise in Ansicht eine Anwendung der Erfindung an einer Rohrleitung mit gekrümmtem Verlauf und

Fig. 11   einen Schnitt nach der Linie XI - XI in Fig. 10.

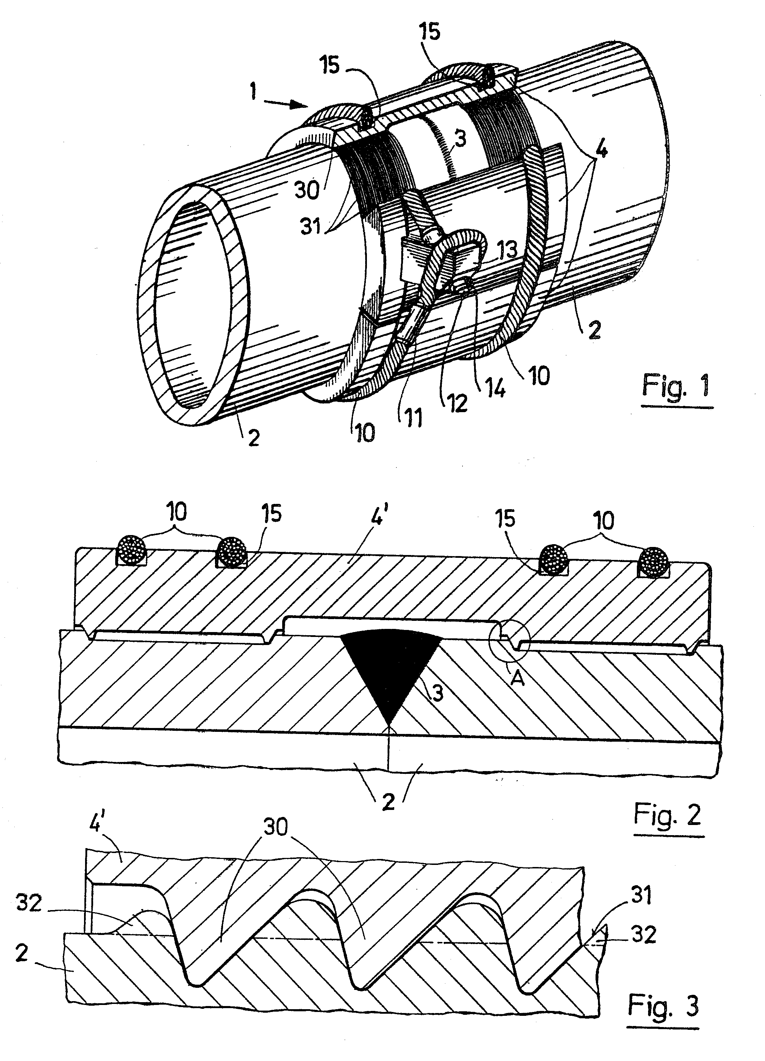

Gemäss Fig. 1 sind zwei Rohrabschnitte 2 einer Rohrleitung mittels einer in Umfangsrichtung verlaufenden Schweissnaht 3 miteinander verbunden, die die gefährdete Stelle der Rohrleitung bildet. Die Leitung führt z.B. ein heisses Medium einer Kernreaktoranlage. Die Vorrichtung 1 zum Verhindern eines Bruches weist sechs zueinander parallel angeordnete, beidseitig der Schweissnaht 3 mit den Rohrabschnitten 2 in wärmeleitender Verbindung stehende Zugstäbe 4 auf. Die Vorrichtung weist ferner zwei die Rohrleitung mit den Zugstäben 4 umschlingende Stahlseile 10 auf, die die Zugstäbe an die Rohrabschnitte 2 anpressen. Das eine Ende jedes Seils 10 bildet eine von einem Halter 11 zusammengehaltene Schlaufe, während das andere Ende in einem ein Gewinde aufweisenden, im wesentlichen zylindrischen Seilabschluss 12 steckt. Die Seile 10 verlaufen in Nuten 15, die mit rechteckigem Querschnitt in die Zugstäbe 4 eingearbeitet sind. In jeder Nut 15 steckt ein Verankerungsbock 13, um den herum die Seilschlaufe gelegt ist und der eine Bohrung zur Aufnahme des Seilabschlusses 12 aufweist. Auf dem Gewinde jedes Seilabschlusses sitzt eine Einstellmutter 14, mit der das Seil 10 angespannt wird, so dass die Zugstäbe 4 gegen den jeweiligen Rohrabschnitt 2 angepresst werden. Die Verankerungsböcke 13 werden vorzugsweise gleichmässig über den Umfang der Rohrleitung verteilt angeordnet.

Die Zugstäbe 4 sind an beiden Enden mit einer Verzahnung 30 versehen, die mit in die Rohrabschnitte 2 eingearbeiteten Rillen 31 zusammenwirkt. Die Zähne der Verzahnung 30 und die Rillen 31 müssen so genau hergestellt werden, dass bei der Montage der Vorrichtung 1 - die bei Ausser-Betrieb befindlicher Rohrleitung, d.h. entsprechend niedriger Temperatur stattfindet - kein wesentliches Spiel zwischen den Zugstäben 4 und den Rohrabschnitten 2 vorhanden ist. In diesem Beispiel sind die Rohrabschnitte 2 aus einem austenistischen Stahl und die Zugstäbe 4 aus einem ferritischen Material hergestellt, so dass die Rohrabschnitte 2 einen grösseren Wärmedehnungskoeffizient aufweisen als die Zugstäbe 4. Beim Uebergang der Rohrleitung auf ihre Betriebstemperatur dehnen sich die Rohrabschnitte 2 mehr als die Zugstäbe 4, wodurch eine Kraft entsteht, die die Rohrabschnitte 2 gegeneinander zieht und dadurch die Schweissnaht 3 entlastet.

Beim Ausführungsbeispiel nach Fig. 2 sind bei sonst gleicher Gestaltung wie in Fig. 1 vier Stahlseile 10 vorgesehen. Auch in diesem Fall werden die in Fig. 2 nicht gezeigten Verankerungsböcke 13 gleichmässig über den Umfang der Rohrabschnitte 2 verteilt. In beiden Fig. 1 und 2 sind die Stahlseile 10 so angeordnet, dass sie die Verzahnung der Zugstäbe 4 bzw. 4' möglichst gleichmässig belasten.

Die in Fig. 3 gezeigte Verzahnung 30 der Zugstäbe 4' ist auch für die gemäss Fig. 1 repräsentativ. Die Rillen 31 sind rechtwinklig zur Längsrichtung der Rohrleitung in die Rohrabschnitte 2 mittels einer an sich bekannten, aber für die in frage kommenden Verhältnisse konstruierte Bearbeitungsmaschine eingewalzt. Das durch das Einwalzen nach aussen verdrängte Material 32 bildet einen Bestandteil der Rillen 31. Es ist auch möglich, die Rillen 31 spanabhebend zu formen; aus Festigkeitsgründen ist aber das Einwalzen zu bevorzugen. Aus den gleichen Gründen sind die Rillen so wenig tief wie möglich. Die Zähne der Verzahnung 30 werden entweder ausgefräst oder eingewalzt, vorzugsweise im Inneren eines Ringes, der nachträglich in sechs, die Zugstäbe 4, 4' bildende Segmente aufgeteilt wird.

Entsprechend den Randbedingungen des jeweiligen Anwendungsfalles können anstelle der Stahlseile 10 Seile aus einem anderen Werkstoff verwendet werden.

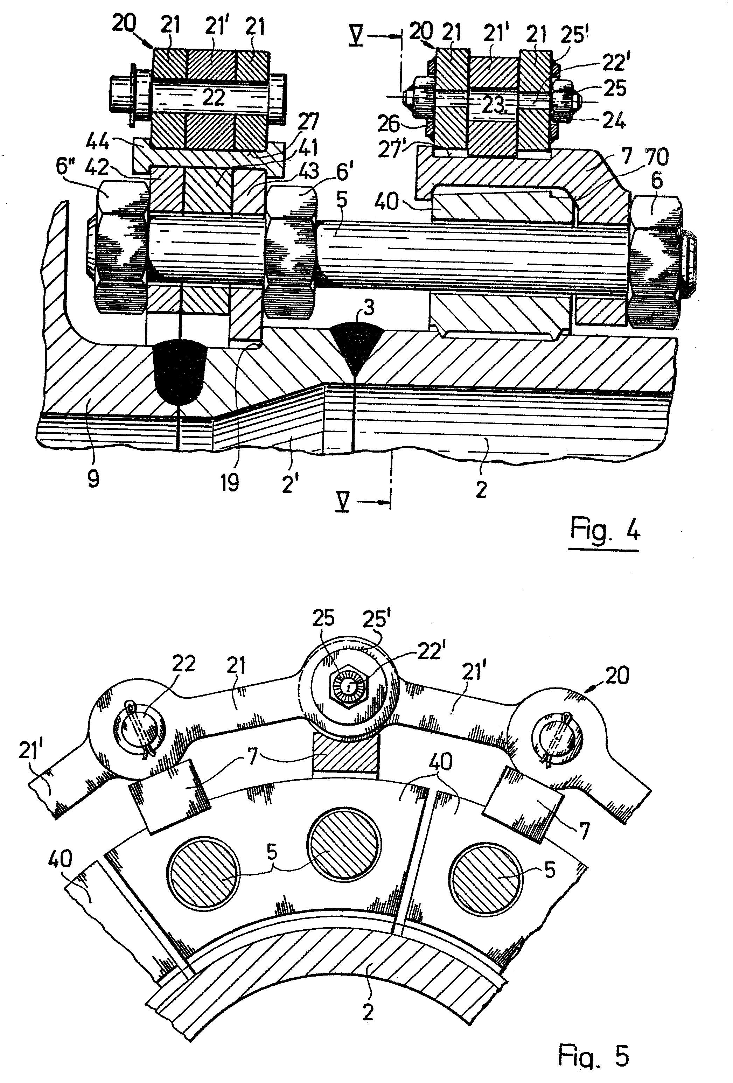

Im Ausführungsbeispiel nach Fig. 4 und 5, enthält die Vorrichtung zwölf Zugstäbe in Form von Zugbolzen 5. Je zwei Zugbolzen 5 mit je drei Muttern 6, 6' und 6" sind in einem zwei Bohrungen aufweisenden, ringsegmentförmigen Verbindungselement 40, das auf einer Seite der Schweissnaht 3 angeordnet ist. Auf der anderen Seite dieser Naht sind die beiden Zugbolzen 5 in einem ringsegmentförmigen Verbindungselement 41 geführt, das zwischen einem Decksegment 42 und einem nach innen etwas verlängerten Decksegment 43 angeordnet ist. In Längsrichtung der Rohrleitung gesehen sind     die Verbindungselemente 41 und die Decksegmente 42 einander gleich
und weisen je zwei Bohrungen auf, durch die sich jeweils
zwei Zugbolzen 5 erstrecken. Die verlängerten Decksegmente 43 unterscheiden sich von den Decksegmenten 42
nur durch die etwas grössere Höhe. In Längsrichtung der
Rohrleitung gesehen stehen sich die Verbindungselemente
40 und 41 einerseits und die Decksegmente 42 und 43
andererseits genau gegenüber, wobei die letztgenannten
gegenüber den Verbindungselementen 40 und 41 um eine
Lochteilung, d.h. hier um 30$^{\mathrm{o}}$, versetzt eingebaut sind.
Die beiden Muttern 6' und 6" halten die Verbindungselemente 41 sowie die Decksegmente 42 und 43 zusammen.
In diesem Beispiel schliesst die Rohrleitung an eine
Armatur 9 an, wobei an einem Rohrleitungsabschnitt 2'
eine Schulter 19 vorhanden ist, an der die Verlängerung
der Decksegmente 43 anliegt.  Die Verbindungselemente
40 sind mit einer Verzahnung gemäss Fig. 3 versehen.

Anstelle von Stahlseilen besorgen in Fig. 4 und 5 zwei
Ketten 20 das Anpressen der Zugstäbe auf den Rohrabschnitt 2. Die Ketten 20 bestehen aus äusseren Laschen
21 und inneren Laschen 21', die mittels Zapfen 22 und
22' auf bekannte Weise gelenkig zusammengehalten werden.
Jeder zweite Zapfen 22' weist im Bereich der inneren
Laschen 21' einen Exzenter 23 und an jedem Ende eine
Zapfenmutter 24 auf. Nach der Montage der Kette werden
die Zapfenmuttern 24 mittels Befestigungsschweissnähten
25 fest mit den Zapfen 22' verbunden. So können die
Ketten 20 einfach durch Drehen der Zapfen 22' sehr
stramm angezogen und nach Erreichen einer gewünschten
Kettenspannung mit Hilfe von Fixierscheiben 26 in ihrer
Lage gesichert werden. Dazu weist jede Fixierscheibe 26 in ihrer Mitte ein sechseckiges Loch auf, das eng auf die Zapfenmutter 24 passt, so dass die Fixierscheiben 26 über die Zapfenmutter 24 geschoben und mittels Befestigungsschweissnähten 25' an den äusseren Laschen 21 befestigt werden können.

Zwischen der in Fig. 4 linken Kette 20 einerseits und den Verbindungselementen 41 und den Decksegmenten 42 und 43 andererseits sind je Verbindungselement 41 zwei Unterlagen 44 vorgesehen, die je mit einer Mulde 27 versehen sind, in der sich die Kette 20 besonders gut abstützt.

Zwischen der in Fig. 4 rechten Kette 20 einerseits und den Verbindungselementen 40 andererseits befindet sich je Zugbolzen 5 ein Hebelarm eines Winkelhebels 7, dessen anderer Hebelarm sich zwischen der dritten Mutter 6 und dem Verbindungselement 40 erstreckt. Der Winkelhebel 7 stützt sich bei fertig montierter Vorrichtung lediglich an einem Schwenkpunkt 70 des Verbindungselementes 40 ab. An diesem Punkt 70 sind die von einer radialen Reaktionskraft der Kette 20 und von der Zugkraft des Zugbolzens 5 verursachten Momente einander entgegengesetzt gleich und die resultierende Kraft durch den Schwenkpunkt 70 verläuft durch die Verzahnung zwischen dem Verbindungselement 40 und dem Rohrabschnitt 2. So ergibt sich ein optimales Aufliegen der Verbindungselemente 40 auf dem Rohrabschnitt 2, wobei ein Abheben des Verbindungselementes 40 mit Sicherheit vermieden wird, da jede Zugkraft der Zugbolzen eine dazu proportionale, radiale Reaktionskraft der Kette hervorruft. Jeder Winkelhebel 7 weist zur Abstützung der Kette 20 - wie die Unterlagen 44 - eine Mulde 27' auf. Die Verbindungselemente 40 weisen auf ihrer dem Rohrabschnitt 2 abgewandten Fläche eine geringe Neigung auf, die in Fig. 4 von links nach rechts ansteigt und übertrieben stark gezeichnet ist. Durch die Neigung ist eine alleinige Abstützung des Winkelhebels 7 an dem Schwenkpunkt 70 beim Auftreten der Zugkraft des Zugbolzens 5 gewährleistet. Die Berührungsstelle 70 ist normalerweise etwas gerundet, kann aber auch flach und rechtwinklig zur Richtung der oben erwähnten resultierenden Kraft verlaufen.

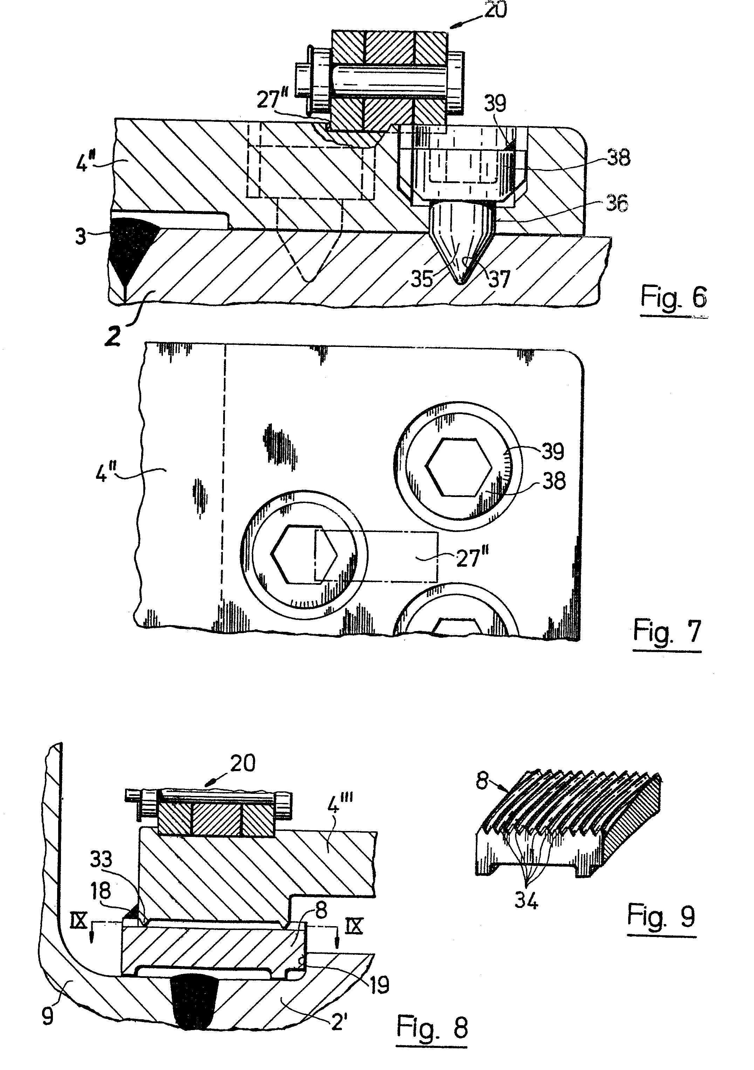

Bei der Ausführungsform gemäss Fig. 6 und 7 weisen die Zugstäbe 4", die mittels Ketten 20 gegen die Rohrabschnitte angepresst sind, anstelle von Zähnen Stifte 35 auf, die bezüglich der Schweissnaht 3 in je zwei Reihen von Bohrungen 36 der Zugstäbe 4" spielfrei geführt sind und in entsprechenden radialen Anbohrungen 37 in den Rohrabschnitten 2 ebenfalls spielfrei stecken. An dem den Rohrabschnitten 2 abgewandten Ende weist jede Bohrung 36 ein Gewinde auf, in das jeweils eine einen Innensechskant aufweisende Scheibe 38 zum Halten und zum sicheren Andrücken der Stifte 35 angebracht ist. Die Stifte 35 bestehen aus einem hochfesten Stahl, während die Scheiben 38 aus einem gut schweissbaren Material hergestellt sind, damit sie nach dem Anziehen mittels Schweisspunkten 39 gesichert werden können. Im Hinblick auf die grossen Beanspruchungen, die hier auftreten können, sind die Anbohrungen 37 fein poliert, und/oder durch mechanische Schläge, hydraulischen Druck oder Explosiv-Verformung verfestigt. Aehnlich wie im Beispiel nach Fig. 4 und 5 berühren die Ketten 20 die Zugstäbe 4" in Mulden 27". Die Mulden befinden sich jeweils zwischen zwei benachbarten Bohrungen 36 einer Reihe, wobei in der Nachbarreihe je Mulde 27" eine Bohrung 36 entfällt (siehe die strichpunktierte Anordnung einer Mulde 27" in Fig. 7). Die Kette 20 ist so angeordnet, dass sie dem Anziehen und dem Sichern der Scheiben 38 nicht im Wege steht, wodurch nach definitiver Vorspannung der Ketten 20 die Stifte 35 sicher angepresst werden. Bei Bedarf können bei einer Demontage der Vorrichtung die Schweisspunkte 30 gebrochen werden und die Stifte 35 neu unter Druck gesetzt werden. Um Spiel und unzulässige Spannungen zu vermeiden, werden die Anbohrungen 37 erst im Laufe der erstmaligen Montagearbeiten der Vorrichtung, nach einer provisorischen Befestigung der Zugstäbe 4" mittels dünnerer Ketten oder Seile, in ihrer endgültigen Lage gebohrt, wobei die Zugstäbe 4" selbst als Lehre für die Bohrarbeiten dienen. Dadurch entfallen für diese Variante die hohen Genauigkeitsanforderungen, die bei der Herstellung der vorher beschriebenen Beispiele zu berücksichtigen sind. Dafür erlaubt die Verzahnung das Uebertragen von grösseren Kräften je Flächeneinheit.

Wie im Beispiel nach Fig. 4 und 5 zeigt Fig. 8 einen Rohrabschnitt 2', der an eine Armatur 9 anschliesst. Sechs Zugstäbe 4'" sind mittels einer Kette 20 über sechs zwischen den Zugstäben 4'" und der Rohrleitung angeordnete Zwischenelemente 8 an den Rohrabschnitt 2' und 9 angepresst. Die Zwischenelemente 8 sind ferner an der Schulter 19 gegen die von den Zugstäben 4'" stammenden Zugkräfte abgestützt. Mittels eines Gewindes, das in den Zugstäben 4'" von Zähnen 33 und in den Zwischenelementen 8 von Rillen 34 gebildet wird, ist durch einfaches Verschieben der Zwischenelemente 8 bis zur Anlage an der Schulter 19 die erforderliche Spielfreiheit und gegebenenfalls Vorspannung zwischen jedem Zugstab 4'" und der Rohrleitung einstellbar. Unerwünschte Verschiebungen zwischen den Zugstäben 4'" und den Zwischenelementen 8 werden mittels Schweisspunkten 18 verhindert.

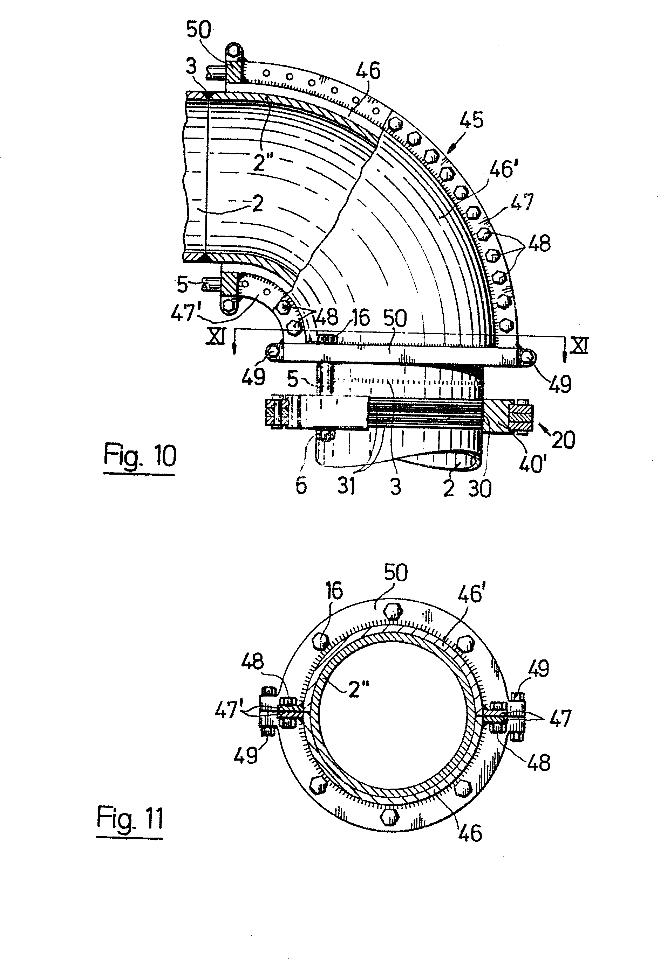

Gemäss Fig. 10 und 11 bilden zwei einen Rohrkrümmer 2" mit den Rohrleitungsabschnitten 2 verbindende Schweissnähte 3 die gefährdeten Stellen. Hier wird die rohrkrümmerseitige Befestigung der Zugbolzen 5 an die Rohrleitung mit Hilfe eines gekrümmten Verbindungselementes 45 geschaffen, das aus zwei Halbschalen 46 und 46' besteht. Die Halbschalen 46 und 46' sind entlang der längsten und der kürzesten Mantellinie des Rohrkrümmers 2" verlaufender Flansche 47 bzw. 47' mittels Schrauben 48 miteinander verbunden und liegen eng an dem Rohrkrümmer 2" an. Zum gekrümmten Verbindungselement 45 gehört ferner nahe jedem Ende des Rohrkrümmers 2" ein zweiteiliger Befestigungsring 50, dessen beide Teile mittels parallel zu den Schrauben 48 verlaufender Schrauben 49 miteinander verbunden werden. Jeweils sechs Zugbolzen 5 sind mit Hilfe von Muttern 16 an jedem Ring 50 befestigt. Auf den geraden Rohrabschnitten 2 besteht die Vorrichtung aus sechs ringsegmentförmigen Verbindungselementen 40', an denen die Zugbolzen 5 mittels der Muttern 6 auf die gleiche Weise wie an den Ringen 50 befestigt sind. Die Verbindungselemente 40' weisen eine Verzahnung auf, die in Rillen an den geraden Rohrabschnitten 2 eingreifen; sie werden von Ketten 20 auf zuvor beschriebene Art an die Abschnitte 2 angepresst.

Die beschriebenen Ausführungsbeispiele sind einige bevorzugte Anwendungsfälle der Erfindung, die besonders illustrativ sind. Weitere Varianten sind möglich. So kann die Verzahnung zwischen dem Zugstab und der Rohrleitung, abweichend von Fig. 3, symmetrische Zähne und Rillen aufweisen. Auch die Anzahl der Zugstäbe je Vorrichtung kann bei Bedarf variiert werden. Ebenfalls kann die Anzahl Decksegmente 42 und 43 verschieden von der Anzahl Verbindungselemente 41 und/oder 40 sein. Anstelle der Befestigungsschweissnähte 25' in Fig. 4 können Stifte oder Schrauben für die Befestigung der Fixierscheiben 26 verwendet werden.

Die Erfindung lässt sich gemäss Anspruch 3 ebenfalls dann anwenden, wenn die Betriebstemperatur tiefer als die ausserbetriebliche Temperatur liegt, was beispielsweise in Kälteanlagen vorkommt. In diesem Fall muss der Wärmedehnungskoeffizient der Rohrleitung kleiner sein als der Wärmedehnungskoeffizient der Zugstäbe.

<u>P a t e n t a n s p r ü c h e</u>

1. Vorrichtung zum Verhindern eines Bruches an einer eine gefährdete Stelle aufweisenden Rohrleitung, dadurch g e k e n n z e i c h n e t, dass mindestens ein Zugstab aussen an der Rohrleitung beiderseits der gefährdeten Stelle befestigt ist und dass mindestens ein die Rohrleitung mit dem Zugstab umschlingendes Zugband vorgesehen ist, das den Zugstab gegen die Rohrleitung drückt.

2. Vorrichtung nach Anspruch 1, mit mehreren Zugstäben, dadurch gekennzeichnet, dass die Zugstäbe gleichmässig über den Umfang der Rohrleitung verteilt angeordnet sind.

3. Vorrichtung nach Anspruch 1 oder 2, wobei die Rohrleitung eine Betriebstemperatur aufweist, die von ihrer ausserbetrieblichen Temperatur verschieden ist, dadurch gekennzeichnet, dass der Werkstoff der Rohrleitung und der Werkstoff des Zugstabes voneinander verschiedene Wärmedehnungskoeffizienten aufweisen.

4. Vorrichtung nach einem der Ansprüche 1 bis 3, dadurch gekennzeichnet, dass der Zugstab mindestens auf einer Seite bezüglich der gefährdeten Stelle mit einer Verzahnung versehen ist, die mit in die Aussenfläche der Rohrleitung eingearbeiteten, vorzugsweise eingewalzten, umlaufenden Rillen zusammenwirkt.

5. Vorrichtung nach einem der Ansprüche 1 bis 3, dadurch gekennzeichnet, dass der Zugstab mindestens auf einer Seite bezüglich der gefährdeten Stelle Bohrungen aufweist, in denen radial zum Rohr gerichtete Stifte geführt sind, die in entsprechend angeordneten Anbohrungen in der Rohrleitung eingreifen und in dieser Eingriffsstellung fixiert sind.

6. Vorrichtung nach Anspruch 5, dadurch gekennzeichnet, dass zum Fixieren der Stifte in die Bohrungen eingeschraubte Scheiben vorgesehen sind.

7. Vorrichtung nach einem der Ansprüche 1 bis 6, dadurch gekennzeichnet, dass das Zugband ein Drahtseil ist.

8. Vorrichtung nach einem der Ansprüche 1 bis 6, dadurch gekennzeichnet, dass das Zugband eine Laschenkette ist.

9. Vorrichtung nach Anspruch 8, dadurch gekennzeichnet, dass mindestens ein Zapfen der Laschenkette einen Exzenter aufweist, an dem mindestens eine der den Zapfen umfassenden Laschen verankert ist.

10. Vorrichtung nach einem der Ansprüche 2 bis 9, dadurch gekennzeichnet, dass die Zugstäbe in Form von Zugbolzen ausgebildet sind und in beidseitig der gefährdeten Stelle angeordneten, ringsegmentförmigen Verbindungselementen geführt sind.

11. Vorrichtung nach Anspruch 10, dadurch gekennzeichnet, dass mindestens ein zwischen dem Zugband und einem der Zugbolzen angeordneter Winkelhebel mit zwei Hebelarmen vorgesehen ist, der an dem zum Zugbolzen gehörenden Verbindungselement schwenkbar abgestützt ist, wobei ein Hebelarm vom Zugband etwa radial zur Rohrleitung hin und der andere Hebelarm vom Zugbolzen etwa parallel zum Rohr beansprucht ist.

12. Vorrichtung nach einem der Ansprüche 1 bis 3, dadurch gekennzeichnet, dass der Zugstab mindestens auf einer Seite bezüglich der gefährdeten Stelle mit einer Verzahnung versehen ist und dass zwischen dem Zugstab und der Rohrleitung ein gerilltes, mit der Verzahnung zusammenwirkendes Zwischenelement vorgesehen ist, wobei die Spitzen der Verzahnung auf einer um die Rohrleitung verlaufenden Schraubenlinie liegen, und dass Mittel vorhanden sind, die das Zwischenelement und den Zugstab in einer gewünschten Stellung gegeneinander sichern.

13. Vorrichtung nach einem der Ansprüche 1 bis 12, wobei die gefährdete Stelle sich nahe an einer Rohrkrümmung befindet, dadurch gekennzeichnet, dass auf der Seite der Rohrkrümmung ein der Rohrkrümmung angepasstes, aus mindestens zwei miteinander verbindbaren schalenartigen Bestandteilen zusammengesetztes Verbindungselement vorgesehen ist, das enganliegend mindestens einen Teil der Länge der Rohrkrümmung umhüllt.

Fig. 1

Fig. 2

Fig. 3

Fig. 4

Fig. 5

Fig. 6

Fig. 7

Fig. 8

Fig. 9

Fig. 10

Fig. 11